# EUROPEAN PATENT SPECIFICATION

(11) **EP 3 063 596 B1**
(45) Date of publication and mention of the grant of the patent: **25.09.2019**
(21) Application number: 13786721.4
(22) Date of filing: 30.10.2013
(51) Int. Cl.: G05B 23/02

(54) **METHOD OF REGRESSION FOR CHANGE DETECTION**
REGRESSIONSVERFAHREN ZUR ÄNDERUNGSERKENNUNG
PROCÉDÉ DE RÉGRESSION POUR DÉTECTION DE CHANGEMENT

(43) Date of publication of application: 07.09.2016
(73) Proprietor: GE Aviation Systems Limited, Bishops Cleeve Cheltenham Gloucestershire GL52 8SF (GB)
(72) Inventor: CALLAN, Robert Edward, Cheltenham Gloucestershire GL52 8SF (GB); MEEKIN, Paul, Cheltenham Gloucestershire GL52 8SF (GB)
(74) Representative: Openshaw & Co.
(86) International application number: PCT/GB2013/052829
(87) International publication number: WO 2015/063435

(56) References cited:
- US-A1- 2007 250 292
- US-A1- 2010 023 307
- US-A1- 2013 116 996

## Description

### BACKGROUND

A typical method for detecting abnormal change in the health of a machine is to compare measured features to their expected values. A *feature* typically refers either to a directly measured variable (e.g. temperature) or to a derived characteristic where the measured variable is transformed to a feature that describes more closely the behavior being monitored. If a feature being monitored for change is continuous (i.e., analog) and correlated to one or more other features, regression may be used to derive the expected value and the difference (i.e. residual) calculated between the measured and predicted values. These residual values can be automatically tracked for trends and, when a problem is detected, they can provide diagnostic information to assist with isolating the cause of the problem.

Depending on the system being monitored, there are potentially many different regression methods. For some systems, a physical model may be available. However, many applications do not rely only on a physical model even when one is available because the models fail to capture imperfections in the system. A mismatch between the model and the system can occur for a multitude of reasons including, inter alia, variations in component fits, variability in environment conditions, imperfections in manufacture, inaccuracies in sensing, etc US2010/0023307 describes methods for prognosing mechanical systems.

### BRIEF DESCRIPTION

One aspect of the invention relates to a method of deriving a regression model for detecting change in the health of a physical system. The method includes: receiving data representative of features of the health of the physical system; fitting the data to a model structure by allowing free parameters that permit different components to freely rotate to provide an optimal fit to the data local to each feature; removing outlier components from the model structure; and adjusting the remaining components in the model structure to share a common orientation. The resulting regression model can derive residual values related to the health of the physical system but is constrained by relationships of the features to each other.

### BRIEF DESCRIPTION OF THE DRAWINGS

In the drawings:

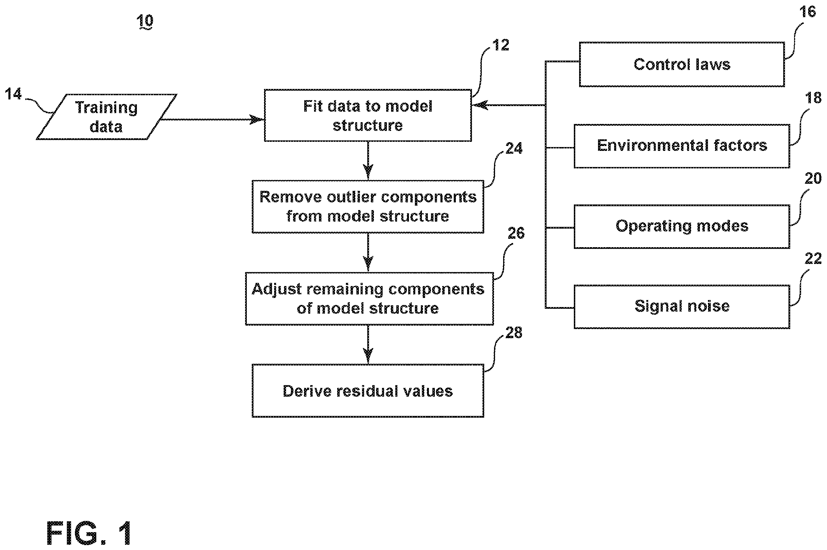

FIG. 1 shows a flowchart detailing a method for generating a regression model for change detection according to an embodiment of the present invention.

### DETAILED DESCRIPTION

In the background and the following description, for the purposes of explanation, numerous specific details are set forth in order to provide a thorough understanding of the technology described herein. It will be evident to one skilled in the art, however, that the exemplary embodiments may be practiced without these specific details. In other instances, structures and devices are shown in diagram form in order to facilitate description of the exemplary embodiments.

The exemplary embodiments are described with reference to the drawings. These drawings illustrate certain details of specific embodiments that implement a module, method, or computer program product described herein. However, the drawings should not be construed as imposing any limitations that may be present in the drawings. The method and computer program product may be provided on any machine-readable media for accomplishing their operations. The embodiments may be implemented using an existing computer processor, or by a special purpose computer processor incorporated for this or another purpose, or by a hardwired system.

As noted above, embodiments described herein may include a computer program product comprising machine-readable media for carrying or having machine-executable instructions or data structures stored thereon. Such machine-readable media can be any available media, which can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium that can be used to carry or store desired program code in the form of machine-executable instructions or data structures and that can be accessed by a general purpose or special purpose computer or other machine with a processor. When information is transferred or provided over a network or another communication connection (either hardwired, wireless, or a combination of hardwired or wireless) to a machine, the machine properly views the connection as a machine-readable medium. Thus, any such a connection is properly termed a machine-readable medium. Combinations of the above are also included within the scope of machine-readable media. Machine-executable instructions comprise, for example, instructions and data, which cause a general purpose computer, special purpose computer, or special purpose processing machines to perform a certain function or group of functions.

Embodiments will be described in the general context of method steps that may be implemented in one embodiment by a program product including machine-executable instructions, such as program codes, for example, in the form of program modules executed by machines in networked environments. Generally, program modules include routines, programs, objects, components, data structures, etc. that have the technical effect of performing particular tasks or implement particular abstract data types. Machine-executable instructions, associated data structures, and program modules represent examples of program codes for executing steps of the method disclosed herein. The particular sequence of such executable instructions or associated data structures represent examples of corresponding acts for implementing the functions described in such steps.

Embodiments may be practiced in a networked environment using logical connections to one or more remote computers having processors. Logical connections may include a local area network (LAN) and a wide area network (WAN) that are presented here by way of example and not limitation. Such networking environments are commonplace in office-wide or enterprise-wide computer networks, intranets and the internet and may use a wide variety of different communication protocols. Those skilled in the art will appreciate that such network computing environments will typically encompass many types of computer system configurations, including personal computers, hand-held devices, multiprocessor systems, microprocessor-based or programmable consumer electronics, network PCs, minicomputers, mainframe computers, and the like.

Embodiments may also be practiced in distributed computing environments where tasks are performed by local and remote processing devices that are linked (either by hardwired links, wireless links, or by a combination of hardwired or wireless links) through a communication network. In a distributed computing environment, program modules may be located in both local and remote memory storage devices.

An exemplary system for implementing the overall or portions of the exemplary embodiments might include a general purpose computing device in the form of a computer, including a processing unit, a system memory, and a system bus, that couples various system components including the system memory to the processing unit. The system memory may include read only memory (ROM) and random access memory (RAM). The computer may also include a magnetic hard disk drive for reading from and writing to a magnetic hard disk, a magnetic disk drive for reading from or writing to a removable magnetic disk, and an optical disk drive for reading from or writing to a removable optical disk such as a CD-ROM or other optical media. The drives and their associated machine-readable media provide nonvolatile storage of machine-executable instructions, data structures, program modules and other data for the computer.

Beneficial effects of the method disclosed in the embodiments include more accurate predictions of residual values that also have reduced noise. Consequently, health monitoring systems employing aspects of the method disclosed in the embodiments generate enhanced information and better assist users with interpretation useful for detecting changes in a monitored system, and they are also valuable for isolating causes of problems (e.g. fault isolation). Better detection and isolation leads to more value by assisting with optimizing an operation (e.g. airline operation).

Data-driven approaches to regression modeling are commonly used, either as the only approach or to supplement a physical model. A data-driven approach uses historical monitored data to learn the regression model. A regression model is a probabilistic model, i.e., a formalization of relationships between variables in the form of mathematical equations. A probabilistic model describes how one or more random variables are related to one or more other variables. The model is probabilistic as the variables are not deterministically but stochastically related. A probabilistic model may include both continuous and discrete features. A continuous feature is an analog input such as temperature and a discrete feature is a countable feature such as a component identifier. As is apparent to those of ordinary skill in the art, continuous features can be made discrete. Continuous features are typically represented by Gaussian variables in a probabilistic model and discrete features by multinomial variables. With a linear regression model, data are modeled using linear predictor functions and unknown model parameters are estimated from the data.

The regression model allows one variable to be predicted from one or more other variables. For example, one engine performance parameter may be predicted from other engine performance parameters. For many applications, a linear regression model is appropriate but an approach which is too simplistic will not have the fidelity to yield the maximum predictive value. For example, a system modeled in a naive way with two modes may lead to a very misleading analysis. Accordingly, the method described herein provides an approach to regression modeling that enables more robust predictions by removing or considerably reducing the impact of noise and different modalities that would otherwise have a major impact on the accuracy of results.

Referring now to Figure 1, a method 10 is shown to derive or learn a regression model from historical data representative of features of the health of a physical system. The method 10 includes a step 12 of fitting the data to a model structure. To fit different modalities and to capture the details of training data 14 including patterns of noise, the model may have many free parameters. At this stage, the model, preferably a linear Gaussian model, is allowed to have many free parameters to permit different modes (or components) to freely rotate to provide an optimal fit to the data local to each mode.

The modes may be conditioned on continuous and/or discrete parameters. If conditioning is used, the conditioning space is first learned, following which latent components of the feature space may be associated with latent components of the conditioning space. The decision to condition and a choice of features for conditioning depends on the application.

For many applications, the system being monitored will have a number of characteristics that typically influence the modeling approach. Characteristics may include control laws 16 that specify an expected relationship between features. Also, different assets within a fleet of assets may each generate multiple modes arising due to manufacturing or assembly variations, environmental factors 18, operating modes 20, etc. Further, signal noise 22 arising from sensor inaccuracies and environmental conditions may greatly affect the data used to monitor the system. In other words, the monitoring devices should also be modeled as part of the system.

According to the method 10, the modalities may be modified. The method 10 may include the step 24 of removing outlier components, e.g., those have low support or are calculated to be outlying. The impact of spurious modalities such as may be caused by outliers and general noise is removed. In this way, the method 10 is effectively doing a form of automated data cleaning while retaining genuine modalities; that is modalities that may be explained from knowledge of how the application domain functions. For example, genuine modalities for the expected behavior of aircraft may derive from knowledge of how an airline operates. In other words, one goal of the method 10 is to allow genuine modalities, but remove the impact of spurious ones (i.e. modes that are not a result of expected behavior).

The remaining components are then adjusted at step 26 to share a common orientation. Information is shared between the modalities and a linear transformation may be applied to adjust the rotation of the modalities so that they share a common orientation but can vary in size and shape. Alternatively or in addition, the remaining components may be forced to share volume and/or shape with one another by application of additional transformations. Methods of manipulating the modalities to change the coordinates and the rotation, volume and/or shape of the modalities include mathematical procedures relating to principal component analysis and factor analysis. For example, varimax rotation is a procedure that affects a change of coordinates that maximizes the sum of the variances of the squared correlations between variables and factors. For many applications, predictions on the adjusted model are expected to be closer to how the system was designed to behave.

The method of the present embodiment uses a data-driven modeling approach to derive residual values, but the model is constrained in a manner consistent with engineering knowledge of how monitored features relate to one another. Consequently, systems employing methods disclosed in the embodiments are robust to noise, different modalities, and can perform predictions when one or more measurements are missing and will give an indication of confidence in the prediction.

This embodiment of the invention describes an approach to deriving regression models for change detection in health features of a physical system. The method utilizes a probabilistic model to predict the expected value of one or more health parameters. The changes being detected may be in continuous features but these can be conditioned on continuous or discrete features or a combination thereof.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A method (10) of deriving a regression model for detecting change in the health of a physical system comprising:
receiving (14) data representative of features of the health of the physical system, **characterized by** the following features:
fitting (12) the data to a model structure by allowing free parameters that permit different components to freely rotate to provide an optimal fit to the data local to each feature;
removing (24) outlier components from the model structure; and
adjusting (26) the remaining components in the model structure to share a common orientation, wherein the resulting regression model can derive residual values (28) related to the health of the physical system but is constrained by relationships of the features to each other.

2. The method (10) of claim 1, wherein fitting (12) the data involves learning a linear Gaussian model.

3. The method (10) of either of claim 1 or 2, wherein the components are conditioned on one of continuous or discrete parameters.

4. The method (10) of any preceding claim, wherein the components are conditioned on continuous and discrete parameters.

5. The method (10) of claim 4, wherein latent components of a feature are associated with latent conditioned components.

6. The method (10) of any preceding claim, wherein outlier components are calculated.

7. The method (10) of any preceding claim, wherein the common orientation includes one of volume or shape.

## Patentansprüche

1. Verfahren (10) zum Ableiten eines Regressionsmodells zum Erfassen einer Änderung der Integrität eines physikalischen Systems, umfassend:
Empfangen (14) von Daten, die für Merkmale der Integrität des physikalischen Systems bezeichnend sind, **gekennzeichnet durch** die folgenden Merkmale:
Anpassen (12) der Daten an eine Modellstruktur durch Ermöglichen von freien Parametern, die es verschiedenen Komponenten erlauben, sich frei zu drehen, um eine optimale Anpassung an die Daten, die lokal für jedes Merkmal sind, bereitzustellen;
Entfernen (24) von Ausreißerkomponenten aus der Modellstruktur; und
Einstellen (26) der verbleibenden Komponenten in der Modellstruktur, um eine gemeinsame Ausrichtung zu teilen, wobei das resultierende Regressionsmodell Restwerte (28) ableiten kann, die sich auf die Integrität des physikalischen Systems beziehen, aber durch Beziehungen der Merkmale zueinander eingeschränkt ist.

2. Verfahren (10) nach Anspruch 1, wobei das Anpassen (12) der Daten auf einem Lernen eines linearen Gaußschen Modells beruht.

3. Verfahren (10) nach entweder Anspruch 1 oder 2, wobei die Komponenten auf kontinuierliche oder diskrete Parameter konditioniert sind.

4. Verfahren (10) nach einem der vorhergehenden Ansprüche, wobei die Komponenten auf kontinuierliche und diskrete Parameter konditioniert sind.

5. Verfahren (10) nach Anspruch 4, wobei latente Komponenten eines Merkmals mit latenten konditionierten Komponenten verknüpft sind.

6. Verfahren (10) nach einem der vorhergehenden Ansprüche, wobei Ausreißerkomponenten berechnet werden.

7. Verfahren (10) nach einem der vorhergehenden Ansprüche, wobei die gemeinsame Ausrichtung Volumen oder Form einschließt.

## Revendications

1. Procédé (10) de dérivation d'un modèle de régression pour détecter un changement dans la santé d'un système physique comprenant :
la réception (14) de données représentatives de caractéristiques de la santé du système physique, **caractérisé par** les fonctionnalités suivantes :
l'ajustement (12) des données à une structure de modèle en permettant à des paramètres libres qui permettent à différentes composantes de tourner librement pour fournir un ajustement optimal aux données locales à chaque élément ;
la suppression (24) des éléments aberrants de la structure du modèle ; et
l'ajustement (26) des composantes restantes dans la structure du modèle pour partager une orientation commune, dans lequel le modèle de régression résultant peut dériver des valeurs résiduelles (28) portant sur la santé du système physique, mais est limité par les relations des fonctionnalités les unes avec les autres.

2. Procédé (10) selon la revendication 1, dans lequel ajuster (12) les données implique l'apprentissage d'un modèle gaussien linéaire.

3. Procédé (10) selon la revendication 1 ou 2, dans lequel les composantes sont conditionnées selon un des paramètre continu et/ou un paramètre discret.

4. Procédé (10) selon l'une quelconque des revendications précédentes, dans lequel les composantes sont conditionnées selon des paramètres continu et discret.

5. Procédé (10) selon la revendication 4, dans lequel les composantes latentes d'une caractéristique sont associées aux composantes conditionnées latentes.

6. Procédé (10) selon l'une quelconque des revendications précédentes, dans lequel les composantes aberrantes sont calculées.

7. Procédé (10) selon l'une quelconque des revendications précédentes, dans lequel l'orientation commune comprend une orientation de volume ou de forme.
